# EUROPEAN PATENT APPLICATION

(11) **EP 0 766 460 A2**
(43) Date of publication of application: **02.04.1997**
(21) Application number: 96115422.6
(22) Date of filing: 26.09.1996
(51) Int. Cl.: H04N 5/235

(54) **Video camera for image data transmission**

(30) Priority: 29.09.1995 JP 253250/95
(71) Applicant: KONICA CORPORATION, Tokyo (JP)
(72) Inventor: Sugawara, Kazuhiko, Hachioji-shi, Tokyo (JP); Ueno, Masahiro, Hachioji-shi, Tokyo (JP); Terauchi, Takashi, Hachioji-shi, Tokyo (JP); Shimada, Masaki, Hachioji-shi, Tokyo (JP)
(74) Representative: Türk, Gille, Hrabal, Leifert

(57) **Abstract**

A video camera for transmitting an image data corresponding to a subject image with compression and decompression processing (6) of the image data. The video camera includes: an automatic controller (7) for automatically adjusting at least exposure condition or white balance of the subject image so that an exposure value and/or a white balance adjusting value of the image data are/is set to the preprogrammed target value; a holding controller for holding the adjusted exposure condition or the adjusted white balance; and a switcher for stopping the adjusting operation of the automatic controller a predetermined time after a beginning of the adjusting operation, and for starting the holding operation of the holding controller in succession.

## Description

### BACKGROUND OF THE INVENTION

The present invention relates to an apparatus adopting a technology to shorten transmission time by compression and decompression of a transmission image, and specifically to a video camera for image data transmission for a TV-conference apparatus, in which image data is transmitted between a sender and a receiver through image output terminals such as a TV or similar apparatus, or a TV-telephone (a visual telephone).

Recently, video cameras comprising a CCD element, are widely being used. For example, in home video cameras, an increase of ease of operation is intended, and the adjustment of exposure conditions, such as the adjustment of the lens iris or the adjustment of exposure time, is automatically performed, so that the burden on the operator's manual adjustment is decreased. On the other hand, when automatic adjustments have been made for the entire camera operation, it is difficult to meet special conditions of use, and in such cases, the ease of operation is reduced by the automatic adjustment on the contrary. Technology aimed to counter the above-described problem is disclosed in Japanese Patent Publication Open to Public Inspection No. 153058/1994. This technology includes the following adjustment modes so as to cope with even conditions of use of the home-video camera which are scarcely conducted, for example, so as to cope with cases in which focusing a subject on a specific portion, other than the central portion of the image frame in the view finder, is intended. An automatic adjustment mode and a manual adjustment mode are both incorporated in the video camera, in which, the fine adjustment to focus the subject on a specific portion is conducted by the manual adjustment mode, after the optimum adjustment to automatically focus the subject in the central portion of the image frame has been quickly conducted by the automatic adjustment mode. After the automatic adjustment mode has been carried out, the focusing mode is automatically switched to the manual mode. Such switching is intended to increase the overall operational ease using the automatic adjustment, and also to cope with various situations of use, which are usually contrary to each other, and which are intended to be compatible with each other.

However, when TV-conferences are held using a video camera in which the above-described technology is adopted, it is difficult that the adjustment mode is switched to the manual adjustment mode in cases where the subjects move here and there, or in cases where exposure or color temperature of the subject is out of range of the automatic adjustment control and can not be converged to the optimum condition by the automatic adjustment. This means that the automatic adjustment follows the subject for a very long period of time, and specifically, when the iris adjustment or the white balance adjustment to correct for the color temperature of the subject is conducted, then the density or color of the image on the image frame is entirely changed. That is, although there are many methods to compress dynamic image data, basically, a key frame is provided per several image frames, and image frames, between two key frames, are formed by supplying the differential data between the image frames and the former key frame so that the overall amount of data of the image frames is minimized. However, even while the movement of the subject is only a part of the image, when the entire image frame is changed in accordance with the iris adjustment or the white balance adjustment, the differential data is increased; thereby, so called frame-missing, which is a major problem, occurs.

### SUMMARY OF THE INVENTION

The present invention is proposed in view of the foregoing conventional problems, and the object of the present invention is to provide a video camera for image data transmission by which an increase of the amount of compressed image data transmitted during a TV-conference is suppressed.

The present invention is structured as follows.

A video camera for image data transmission to transmit an image data corresponding to a subject image with compression and decompression processing of the image data, comprising:
an automatic control means for automatically adjusting at least exposure condition or white balance of the subject image so that the exposure value or the white balance adjusting value is equal to a target value;
a holding control means for automatically holding at least one of the exposure condition or the white balance which is automatically adjusted by the automatic control means; and
a switching control means for stopping the automatic control means when a predetermined period of time has passed after start of adjustment by the automatic control means, and starting the holding operation of the holding control means in succession.

By the structure of the present invention, automatic adjustment for the exposure condition stops after passage of a predetermined period of time, and at least one of the exposure condition or the white balance at that moment is held, and thereby, increase of differential data between the image frames is minimized, resulting in minimization of the total amount of compressed image data.

An example of the present invention is structured such that the above-described exposure condition is an iris stop value.

Due to the above-structure, the exposure condition can be expressed in the iris stop value.

Further, the example of the present invention is structured such that the automatic control means includes a DC driving type auto-iris which is driven in accordance with the iris stop value.

Due to this structure, the iris stop value can be applied for operating the exposure condition.

Still further, the example of the present invention is structured such that the exposure condition is expressed in the exposure time period.

Due to this structure, exposure time can be applied for the exposure condition.

Yet further, the example of the present invention is structured such that the automatic control means starts adjustment after the power source of the video camera has been activated.

Due to this structure, the automatic adjustment of the exposure condition and the white balance and the holding control thereof are conducted at every activation of the video camera, and thereby, the video camera can properly handle the changes of condition of the subject images according to time passing, and further, troublesome operations, such as switching to the automatic adjustment by the operator, can be simplified.

Furthermore, the example of the present invention is structured such that there is provided a resetting means to reset the camera in response to a trigger signal, and when the trigger signal is inputted to the switching control means during the holding operation of the holding control means, the switching control means restarts the adjusting operation of the automatic control means.

Due to this structure, the automatically adjusted exposure condition or the white balance in the holding status is released, and thereby, the adjustment operation is switched from the holding mode to the automatic adjustment mode in response to the operator's preference.

Further, the example of the present invention is structured such that change of the target value of the video camera and its resetting operation can be conducted by signals from the outside.

Due to this structure, when transmission is conducted by more than 2 video cameras connected to a network, or the like, a person, to whom an image is to be sent, can change the target value of the video camera to send the image, so that an image with desirable brightness or hue can be obtained.

### BRIEF DESCRIPTION OF THE DRAWINGS

Fig. 1 is a general block diagram of a video camera of the present example.

Fig. 2 is a main flow chart of an operation control in the present example.

Fig. 3 is an operation control subroutine of a CCD-iris in the present example.

Fig. 4 is a circuit diagram of an iris driver in the present example.

Fig. 5 is an operation control subroutine of an auto-white operation in the present example.

Fig. 6 is a subroutine of an iris control by a Hall element in the present example.

Fig. 7 is a conceptual view of a TV-conference system employing personal computers and video cameras in the present example.

Fig. 8 is a conceptual view showing an operation screen, which is more concretely shown than the view of TV-conference systems employing personal computers in Fig. 7.

Fig. 9 is a general block diagram in cases where the video camera in the present example is serially connected to apparatus such as personal computers, or similar apparatus.

### DETAILED DESCRIPTION OF THE PREFERRED EMBODIMENT

An example of the present invention will be described below.

There are 2 methods to control an exposure amount, that is, control of a stop value and control of exposure time. Herein, a stop value control method, for which control of the stop value is usually difficult, will be described.

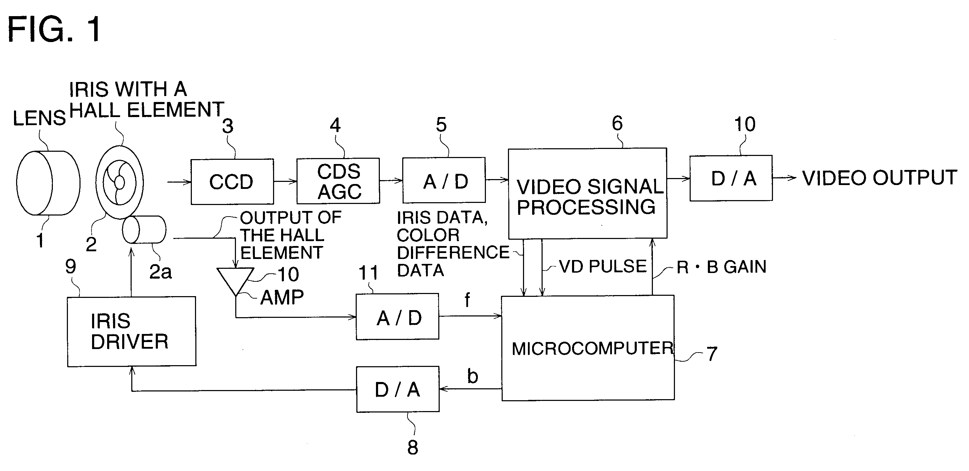

Fig. 1 is a general block diagram of a video camera of the present example, and the present invention will be described, while referring to the drawing.

Light corresponding to an image is collected through a lens 1, and enters into a CCD3 after a stop is adjusted by an iris 2. Here, the iris 2 is a DC driving type auto-iris with a Hall element, which is common in commercial video cameras, and in which the structure is simple and the cost is low. A video signal, which is photoelectrically converted in the CCD3 and outputted therefrom, is subjected to noise removal and gain adjustment so that its signal level arrives at a predetermined level in a CDS (Correlated Double Sampling)·AGC (Automatic Gain Control) circuit 4, and is converted to a digital signal in an A/D converter circuit 5. A DPS (Digital Signal Processor) circuit 6 is a video signal processing circuit, and when the digital signal is inputted to the circuit, various video related signals, such as luminance signals, color difference data, or vertical synchronous signals (VD pulses), or the like, are generated. Then, the outputted digital video signal is converted into an analog signal by a D/A converter circuit 10, and is taken out as a video output.

On the other hand, the DSP circuit 6 outputs iris data for iris control, which will be described later, and 2 color difference data of (R - Y) and (B - Y) necessary for white balance control, to a microcomputer 7, and also outputs a VD pulse.

The Hall element 2a attached to the iris 2, outputs a Hall element output signal after measuring an opened amount of the iris by detecting the magnetic flux density of an iris driving motor 21 (not shown in the drawing). After the Hall element output signal has been amplified to a predetermined level by an AMP 10, the signal is converted into a digital signal by an A/D converter circuit 11, and is outputted to the microcomputer 7.

In the microcomputer 7, the iris is controlled after an iris driver circuit 9 is controlled through the D/A converter circuit 8, based on the VD pulse, iris data/color difference data, and the Hall element output signal, and amplitude of an R·B gain to be outputted to the DPS6, is also set, and white balance control is conducted.

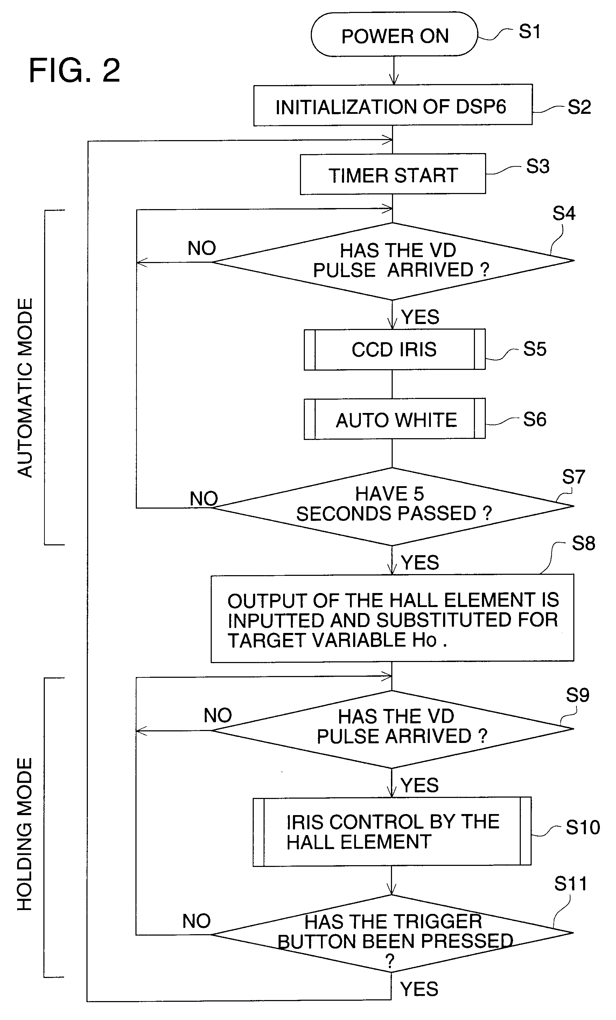

Fig. 2 is a main flow chart of operation control of the video camera, explaining the operations of the video camera, and generally shows the content of the operation control program stored in a ROM of the microcomputer 7, which is an automatic control means, a holding control means, and a switching control means. Referring also to the drawings, operations of the video camera shown in Fig. 1 will be explained below.

When a power source is activated in Step 1, (hereinafter, which is simply referred to as S), parameters, in a DSP6 are initialized in S2 so that the video output is obtained. After initialization, an internal timer is started for counting a predetermined time, which is set at 5 seconds. For the predetermined time, time required for converging the automatic adjustment of the iris and white balance is set, and in the example, 5 seconds are preferable for that time.

After a VD pulse has been inputted in the microcomputer in S4 through S6, subroutine-call for the CCD iris and auto-white is carried out, and automatic adjustment of the iris and white-balance is started. When 5 seconds have passed in S7, the automatic adjustment is stopped, and the sequence advances to the holding control. In this connection, the number of VD pulses may be counted instead of time.

In the holding control, a value f, obtained by digitizing the output of a Hall element 2a after a predetermined time has passed, in the A/D converter circuit 11, is inputted into the microcomputer, and is set to the target variable Ho of the iris stop in S8. In S9 and S10, the subroutine-call of the iris control by the Hall element 2a is carried out after the VD pulse has been inputted, and the holding control of the iris stop value is started. In this connection, because the sub-routine call of the auto-white shown in S6 is not carried out with respect to the white balance control, the R·B gain, which is the adjusting value of the white balance, is fixed and the white balance is held.

Accordingly, the automatic adjustment of the exposure condition stops after passage of a predetermined time, and the holding control is carried out so that the exposure condition at the time is maintained. Thereby, even when changes of situation of the subject image such as that the subject moves or a person passes, occurs, it is prevented that the optimum control by the automatic adjustment is not converged, and an increase of the amount of differential data between the images is minimized. As a result, an amount of compressed image data can be minimized. This method can also be applied for the case where the exposure condition is expressed in an iris stop value.

In S11, when a trigger button is pressed down during holding control of the iris stop value, a trigger signal is generated, the sequence returns to S3 by the trigger signal, and the automatic adjustment of the iris and the white balance is carried out anew. As described above, the exposure condition or the holding condition which has been automatically adjusted, is released, and thereby, even when the situation of the subject image changes by, for example, passage of time such as morning, evening, etc., the sequence can cope with the change, and automatically adjust for it. In this connection, a button to change the target value of an amount of the exposure may also be used for a trigger button, and in this case, the number of buttons can be reduced, resulting in a reduction of the overall size of the apparatus.

In the present example, the automatic adjustment of the exposure condition or the white balance is started after the power supply of the video camera has been activated. Accordingly, the automatic adjustment and the holding control of the exposure condition or the white balance are carried out at every start of the video camera, thereby, troublesome operations such as switching the adjustment to the automatic adjustment, can be simplified.

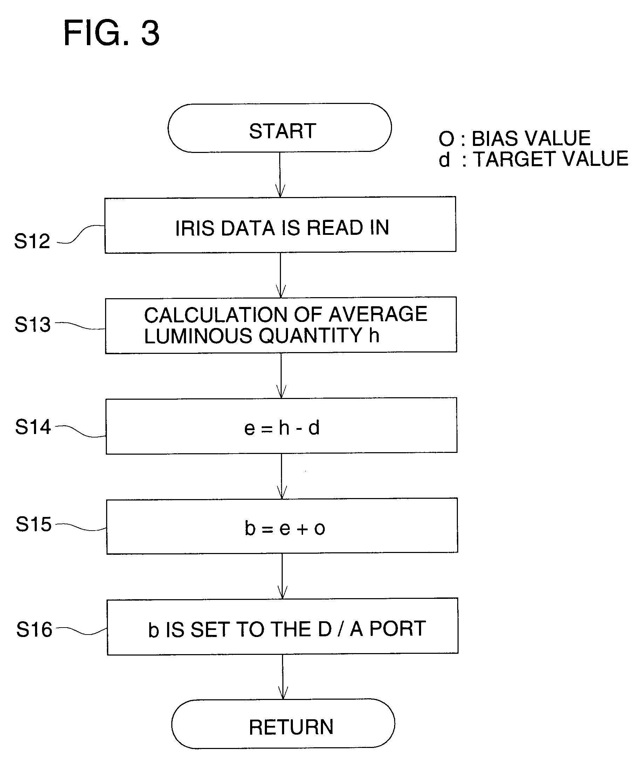

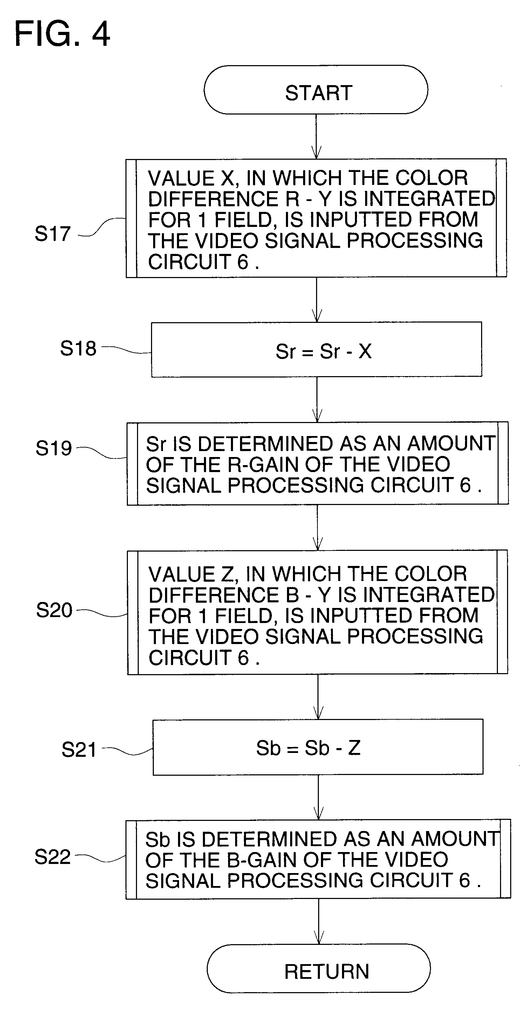

Next, using the subroutine of the CCD iris shown in Fig. 3 and the iris driver circuit diagram shown in Fig. 4, the automatic adjustment of the iris by the CCD output is detailed.

In S12, the serial transmission is conducted to DSP6, and iris data corresponding to an amount of light is inputted from the output signal of the CCD3 through the iris 2. In this connection, in the present example, iris data is inputted for every single image frame according to the input of the VD pulse, however, successive iris data may be inputted.

In S13, luminous quantities h are calculated based on inputted iris data. As calculation methods, there are various methods including a peak value photometry method, an average value photometry method, a weighted photometry method, and etc. Then, in S14, the difference between the calculated value and the target value d is calculated and an amount of error e is determined. The target value d is an amount which expresses a target value of the brightness by which the exposure is compensated for, and the set value can be changed by a switch provided outside the camera, or the like. Further, in S15, an initial value o is added to the amount of error e, and the luminous quantity b which is offset-corrected, is calculated. In S16, the luminous quantity b is set to a port connected to the D/A converter circuit 8, and is held until the next subroutine is called.

In Fig. 4, a voltage V₂, which is equal to an output voltage V₁ of the D/A converter circuit 8 when the luminous quantity b = 0, is set to a "+" input terminal of an OP amplifier 91. When the luminous quantity h is larger than the target value d, a relationship of V₁ > V₂ is obtained, and driving current flows to an iris motor 21 so that the iris 2 is closed. Further, when the luminous quantity h is smaller than the target value d, a relationship of V₁ < V₂ is obtained, and the driving current flows to the iris motor 21 so that the iris 2 is opened in contrast to the above description. As a result, the exposure amount is converged into the target value by repeating the subroutine-call. Then, a DC driving type auto-iris repeats opening and closing movement and enters into a balanced condition, when the exposure amount is equal to the target value.

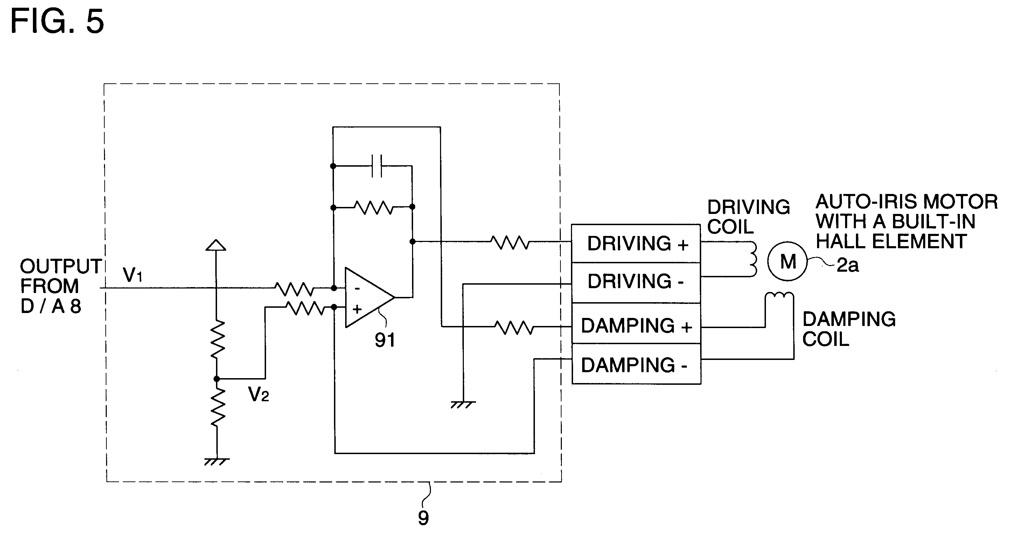

Fig. 5 shows a subroutine for the auto-white adjustment. The automatic adjustment of the white balance will be detailed below using the drawing.

In S17, an amount of integration of color difference data (R - Y) for one image frame is inputted from the DSP6 and is defined as X. In S18, a value of X in which the mathematical sign of X is changed, is accumulated, and is defined as a gain (R gain) in R (red). In S20, an amount of integration of color difference data (B - Y) for one image frame is inputted from the DSP6 and is defined as Z. In S21, a value of Z in which the sign of Z is changed, is accumulated, and is defined as a gain (B gain) in B (blue). Accordingly, by repeating this subroutine-call, the color difference data (R - Y) and (B - Y) are converged to 0, and the white balance of the subject image due to the difference of light sources is automatically adjusted.

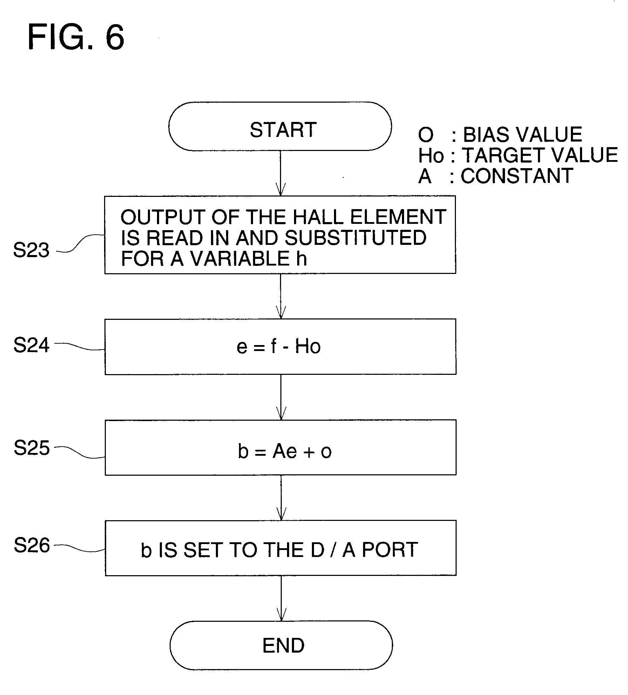

Fig. 6 shows a subroutine for the iris control by the Hall element 2a. Using the drawing, the holding control of the iris 2 using the output of the Hall element 2a will be detailed below.

Initially, although the automatic adjustment of the iris 2 was conducted before the holding control by this subroutine, the holding control of the iris 2 is conducted by using the output signal of the fitted Hall element 2a because the DC driving type auto-iris motor 21 rotates even when the current of a driving coil, which is a manipulated variable of the auto-iris motor, is constant.

In S23, the output signal of the Hall element is inputted from the Hall element 2a through the A/D converter circuit 11, and is defined as a variable f. In S24, the difference between the variable h and the previously set target value variable Ho (the value of the output signal of the Hall element at the time of stoppage of the automatic adjustment) is determined, and the amount of error e is calculated.

Then, in S25 and S26, the obtained amount of error e is multiplied by constant A, and added to the gain during the automatic adjustment of the iris. Then, the initial value o is added to this value, and after the offset-corrected luminous quantity b has been calculated, the value b is set to the port connected to the D/A converter circuit 8, and is held until the next subroutine is called. By conducting this holding control for each field, the stop value of the iris 2 is accurately maintained.

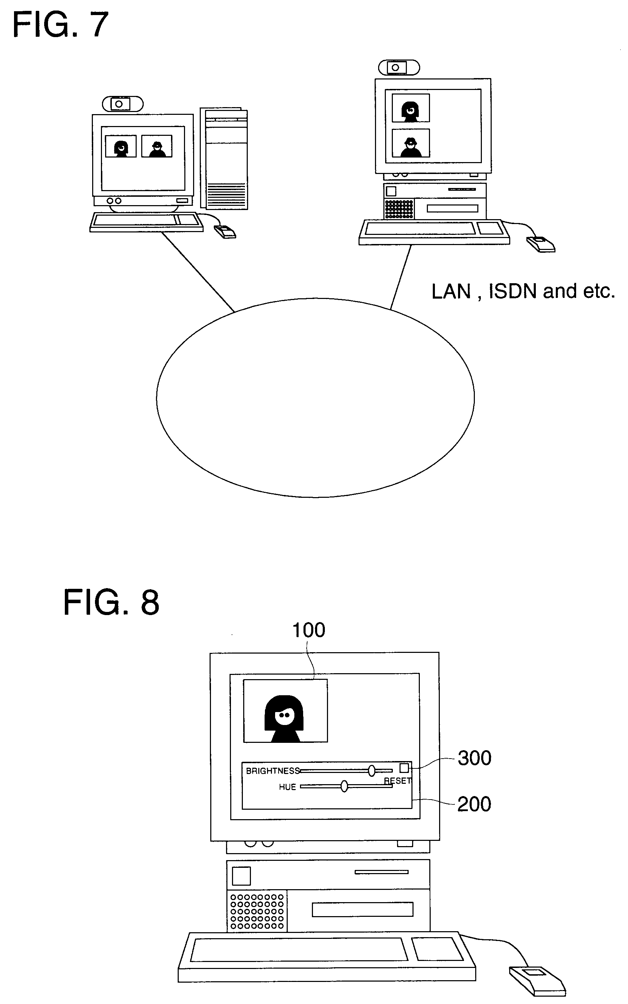

Fig. 7 is a conceptual view of the TV-conference system employing personal computers and video cameras in the present example.

As shown in this conceptual view, more than 2 sets of personal computers exist on the network, connected with LAN, ISDN, etc., and transmission can be carried out while confirming images of a person and its partner on image frames by using video cameras in the present example.

Accordingly, by such a TV-conference system employing personal computers, users of 2 sets of personal computers which can conduct transmission, can carry on the communication such as TV-conference, or the like, with each other by images and voice, without concern of the actual distance.

Fig. 8 is a conceptual view showing a more concrete operational image frame in the TV-conference system employing personal computers shown in Fig. 7.

As shown in this conceptual view, when a video camera in the present example is used, an image area 100 to display at least the image of the partner, and an operation area 200 to operate a video camera equipped to a personal computer of the partner, are provided on the operational image frame so as to operate the video camera equipped to the personal computer of the communicating partner.

In the operation area 200, an icon of the control bar to adjust brightness exists. A target value of the stop of the video camera mounted on the personal computer of the actual communicating partner is adjusted when being commanded by a controller such as a mouse, or the like, so that the brightness of the image of the partner displayed on the image area 100 can be regulated as desired.

In the same manner, an icon of the control bar to adjust hue exists on the operation area 200, and a target value of the white balance of the video camera equipped to the personal computer of the actual communicating partner, is adjusted by being commanded by the controller of the personal computer, so that the hue of the image of the partner displayed on the image area 100 can be regulated as desired.

Further, a reset button 300 is also provided on the operation area 200. By the pressing action of the controller, such as a mouse, on the icon of the reset button 300, the video camera equipped to the personal computer of the partner receives a trigger signal, so that the reset action can be conducted by the trigger signal.

Accordingly, when the video camera in the present example is used, a desirable image can always be obtained by operating icons of the control bar or the reset button provided in the operation area 200, even when the situation of the displayed partner changes and the brightness or hue of the image of the partner changes.

For example, in the case where the partner, with whom communication is intended by using the TV-conference system employing personal computers, is in a room and with a window as backing, the partner, who is a photographic subject, is in a condition of rear lighting, and the image becomes dark and unrecognizable. In such a case, the target value of the brightness is changed by giving a command on the control bar for adjusting the brightness in the operation area 200, and is set so as to be over-exposed beyond the normal target value, and thereby, the image of the partner can be visible with appropriate brightness.

However, even in this case, the video camera in the present example is structured so that unnecessary automatic adjustment is not carried out, and the brightness adjustment of the actual video camera is not started at once only by setting the target value. Accordingly, a command is given to the reset button provided in the operation area 200, the trigger signal is sent to the video camera, and an operation for setting the target value to a new value is conducted.

In the same manner, also in the case where hue adjustment is required, when a command is given to the control bar for hue adjustment so that a new target value for the white balance adjustment is given to the partner's camera, and after that, a command to press the reset button is given, then, the hue adjustment on the partner's camera is actually conducted.

Further, when the display of the image sent from the video camera taking a picture of the person himself, and the adjustment function for the video camera are provided on the image area 100 and the operation area 200, the same image adjustment as described above can be conducted on the image of the person himself.

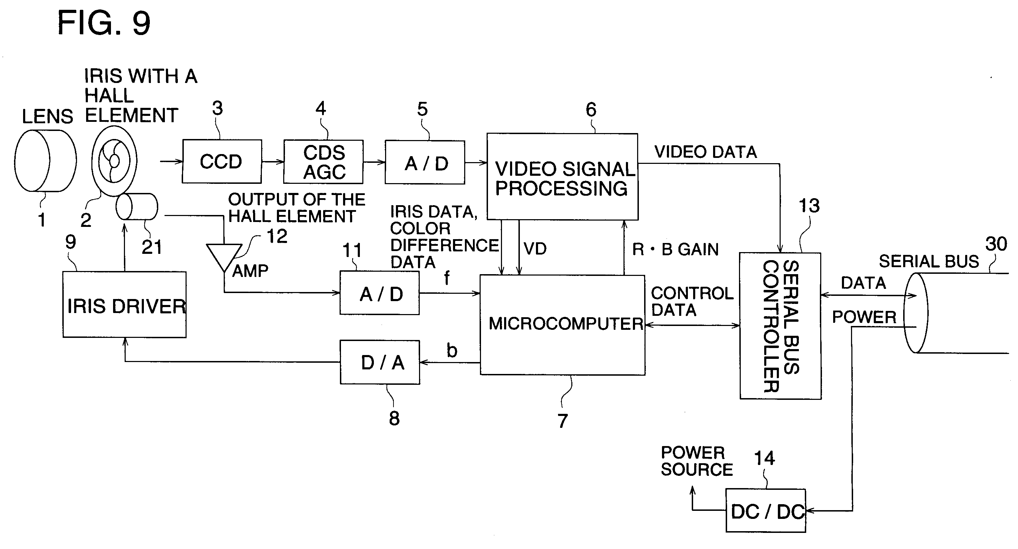

Fig. 9 is a block diagram showing an outline of a case in which the video camera in the present example is serially connected to apparatus such as personal computers, or the like.

In Fig. 9, as can clearly be seen by comparing to Fig. 1, the video camera is provided with a serial bus controller 13 to send and/or receive data signals sent through a serial bus 30, and a DC/DC converter 14 to receive electric power from the serial bus 30 and to supply the electric power to the power source of the video camera. Accordingly, not only image data from the video camera can be transmitted to the apparatus such as personal computers while the serial bus functions as an interface to outside the video camera, but also signals to adjust the brightness and hue of the video camera, or a trigger signal to reset the video camera can be received from the apparatus such as personal computers, or the like.

As described above, according to the present invention, because the automatic adjustment of the exposure condition stops after the passage of a predetermined period of time, and the exposure condition at the time is maintained, a change of the image is limited to only pixels which were originally changed. As a result, an increase of the amount of image data after compression can be suppressed and higher speed transmission can be attained.

Further, according to the present invention, the exposure condition can be applied for the iris stop value.

Still further, according to the present invention, a DC driving type automatic iris can be applied for the operation of the iris stop value.

Still more further, according to the present invention, the exposure condition can be applied for exposure time.

Furthermore, according to the present invention, the automatic adjustment and the holding control of the exposure condition and the white balance are conducted at every start of the video camera, thereby, the video camera can cope with changes of condition of the subject image according to a change of time, and further, troublesome operations, such as switching to the automatic adjustment by operators, can be simplified.

Further, according to the present invention, the automatically adjusted exposure conditions or the holding status of the white balance is released, thereby, the adjustment can be switched to the automatic adjustment corresponding to the operator's preference.

Still further, according to the present invention, the changing operation of the target value of the video camera main body and its resetting operation can be conducted by signals from the outside. Accordingly, when transmission is conducted by more than 2 video cameras connected to a network, or the like, a person, whose image is to be sent, can change the target value of the video camera to send the image, so that an image with desirable brightness or hue can be obtained.

## Claims

1. A video camera for transmitting an image data corresponding to a subject image with compression and decompression processing of said image data, comprising:
an automatic control means for automatically conducting an adjusting operation of at least one of exposure condition and white balance of said subject image so that at least one of an exposure value and a white balance adjusting value of said image data is set to a target value;
a holding control means for conducting a holding operation of at least one of said exposure condition and said white balance which are automatically adjusted by said automatic control means; and
a switching control means for stopping said adjusting operation of said automatic control means a predetermined time after a beginning of said adjusting operation, and for starting said holding operation of said holding control means in succession to stopping of said adjusting operation.

2. The video camera of claim 1, wherein said exposure condition is expressed in an iris stop value.

3. The video camera of claim 2, wherein said automatic control means includes a DC driving type auto-iris which is driven in accordance with said iris stop value.

4. The video camera of claim 1, wherein said exposure condition is expressed in a exposure time period.

5. The video camera of claim 1, wherein said automatic control means starts said adjusting operation in succession to an activation of said video camera.

6. The video camera of claim 1, further comprising:
a resetting means for resetting said video camera in response to a trigger signal;
wherein when said trigger signal is inputted to said switching control means during said holding operation of said holding control means, said switching control means restarts said adjusting operation of said automatic control means, stops said adjusting operation after passage of said predetermined time, and restarts said holding operation of said holding control means in succession.

7. The video camera of claim 6, further comprising:
an interface means for receiving a signal, for changing said target value, from outside said video camera.

8. The video camera of claim 6, further comprising:
an interface means for receiving said trigger signal, for resetting said video camera, from outside said video camera.
